# EUROPÄISCHE PATENTSCHRIFT

(11) **EP 0 740 463 B1**
(45) Veröffentlichungstag und Bekanntmachung des Hinweises auf die Patenterteilung: **27.06.2001**
(21) Anmeldenummer: 96105826.0
(22) Anmeldetag: 13.04.1996
(51) Int. Cl.: H04N 5/21

(54) **Vorrichtung zur verbesserten Darstellung verrauschter Bildsignale**
Device for the improved displaying of noisy video signals
Dispositif pour l'affichage amélioré de signaux vidéo bruités

(30) Priorität: 28.04.1995 DE 19515671
(43) Veröffentlichungstag der Anmeldung: 30.10.1996
(73) Patentinhaber: GRUNDIG Aktiengesellschaft, 90471 Nürnberg (DE)
(72) Erfinder: Ziegler, Cornelius, Dipl.-Ing., Grundig E.M.V., 90762 Fürth (DE)

(56) Entgegenhaltungen:
- EP-A- 0 467 689
- EP-A- 0 631 392
- US-A- 3 742 395
- US-A- 4 768 094
- US-A- 4 801 888
- PATENT ABSTRACTS OF JAPAN vol. 94, no. 10 & JP-A-06 296244 (HITACHI LTD), 21.Oktober 1994,
- PATENT ABSTRACTS OF JAPAN vol. 10, no. 244 (E-430), 22.August 1986 & JP-A-61 073412 (HITACHI LTD), 15.April 1986,
- PATENT ABSTRACTS OF JAPAN vol. 18, no. 687 (E-1651), 26.Dezember 1994 & JP-A-06 276054 (MITSUBISHI ELECTRIC CORP), 30.September 1994,

## Beschreibung

Die Erfindung betrifft eine Vorrichtung zur verbesserten Darstellung verrauschter Bildsignale mit den im Oberbegriff des Anspruchs 1 angegebenen Merkmale.

Aus der DE-A-36 29 536 ist eine Schaltung zur Rauschverminderung bekannt. Diese geht davon aus, daß Rauschen in einem Videosignal im Bereich der hohen Frequenzen enthalten ist und daher durch Dämpfen der hohen Frequenzen eine Rauschverminderung möglich ist. Ein Dämpfen der hohen Frequenzen hat jedoch auch einen Auflösungsverlust zur Folge, wodurch die Bildqualität verschlechtert wird. Aus diesem Grunde wird vorgeschlagen, daß die hohen Frequenzen bei hohem Videosignalpegel möglichst ungedämpft übertragen werden und nur bei geringem Videosignalpegel gedämpft werden. Um dies zu realisieren weist die bekannte Schaltung im Videosignalweg ein bei niedrigen Signalpegeln des Videosignals einschaltbares Tiefpaßfilter auf. Dieses wird von einer Komparatorstufe angesteuert, in welcher der Pegel des Videoeingangssignals mit einer Schwellwertspannung verglichen wird.

PATENT ABSTRACTS OF JAPAN vol. 94, no. 10 & JP - A - 06 296 244 (HITACHI LTD), 21. Oktober 1994, schildert eine Dekodiervorrichtung für Videosignale, in welcher die Rauschstärke im Signal gemessen wird und je nach Rauschstärke zwischen zwei Tiefpassfiltern mit steiler bzw. nicht steiler Charakteristik umgeschaltet wird. Somit kann das Rauschen reduziert werden.

Eine Vorrichtung zur Filterung von Videosignalen ist aus US - A - 3 742 395 bekannt. Das Spektrum des Signals wird auf Höchstwerte analysiert. Die Bandbreite der Filterung wird durch Umschaltung zwischen mehreren Filtern gewählt: entweder zwischen einem Tiefpassfilter, der Frequenzen zwischen 0 und einer gegebenen Frequenz durchlässt, und einem Bandpassfilter, der Frequenzen zwischen der vorgenannten gegebenen Frequenz und einer maximalen Frequenz durchlässt, oder zwischen mehrerer solcher Kombinationen von Tiefpass- und Bandpassfiltern, jeweils mit einer anderen gegebenen Frequenz. Normalerweise wird das Signal tiefpassgefiltert. Wenn aber ein Höchstwert, der über der Tiefpassgrenze liegt, ermittelt wird, wird pulsmäßig auf das entsprechende Bandpassfilter umgeschaltet. Somit wird vermieden, dass Hochfrequenzwerte herausgefiltert werden.

Die Aufgabe der Erfindung besteht darin, eine Vorrichtung zur Darstellung verrauschter Bildsignale mit den im Oberbegriff des Anspruchs 1 angegebenen Merkmalen zu verbessern.

Diese Aufgabe wird bei einer Vorrichtung mit den im Oberbegriff des Anspruchs 1 angegebenen Merkmale durch die im kennzeichnenden Teil des Anspruchs 1 angegebenen Merkmale gelöst. Vorteilhafte Ausgestaltungen und Weiterbildungen ergeben sich aus den abhängigen Patentansprüchen.

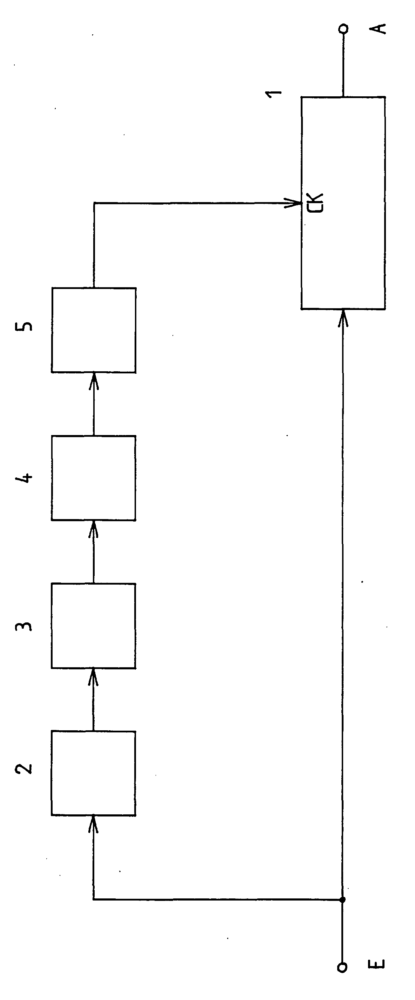

Die Vorteile der Erfindung bestehen insbesondere in einer dynamischen Anpassung der Tiefpaßfilterung an den augenblicklichen Rauschanteil der Bildsignale. Diese dynamische Anpassung kann besonders einfach realisiert werden, wenn als Tiefpaßfilter ein Switched-Capacitor-Tiefpaßfilter verwendet wird, da die obere Grenzfrequenz eines Switched-Capacitor-Tiefpaßfilters einfach durch Änderung eines dem Takteingang des Switched-Capacitor-Tiefpaßfilters zugeführten Taktsignals möglich ist. Dieses Taktsignal wird in vorteilhafter Weise mittels eines spannungsgesteuerten Oszillators erzeugt, dessen Eingang eine Regelspannung zugeführt wird, die proportional zum Rauschanteil der Bildsignale ist. Weitere Vorteile der Erfindung ergeben sich aus der Erläuterung eines Ausführungsbeispiels anhand der Figur.

Diese zeigt eine Vorrichtung zur verbesserten Darstellung verrauschter Bildsignale mit einem Bildsignaleingang E, einem im Bildsignalweg angeordneten Tiefpaßfilter 1 und einem Bildsignalausgang A. Das Tiefpaßfilter 1 ist als Switched-Capacitor-Tiefpaßfilter realisiert und weist einen Takteingang CK auf. Die obere Grenzfrequenz dieses Schwitched-Capacitor-Tiefpaßfilters ist durch eine Änderung des dem Takteingang zugeführten Taktsignals, d.h. durch eine Veränderung der Taktfrequenz möglich.

Die Erzeugung des Taktsignals, welche zur Veränderung der oberen Grenzfrequenz des Switched-Capacitor-Tiefpaßfilters 1 verwendet wird, geschieht wie folgt:

Das am Bildsignaleingang E anliegende Bildsignal wird weiterhin einer Schaltung zur Erkennung des in den Bildsignalen enthaltenen Rauschanteils zugeführt. Diese weist ein Hochpaßfilter 2 und einen ausgangsseitig mit dem Hochpaßfilter verbundenen Hüllkurvendetektor 3 auf. Am Ausgang des Hüllkurvendetektors steht eine Regelspannung zur Verfügung, deren Pegel abhängig von dem im Bildsignal enthaltenen Rauschanteil ist. Dieses Regelsignal wird über einen Verstärker 4, bei welchem es sich beispielsweise um einen Regelverstärker handelt, einem spannungsgesteuerten Oszillator 5 zugeführt. Dieser erzeugt aus dem verstärkten Regelsignal das dem Takteingang des Switched-Capacitor-Tiefpaßfilters zugeführte Taktsignal.

Die in der Figur gezeigte Vorrichtung ermöglicht eine dynamische Anpassung der Tiefpaßfilterung an den augenblicklichen Rauschanteil im Bildsignal derart, daß bei einem steigenden Rauschanteil und damit einem höheren Pegel der Regelspannung und einem Taktsignal kleinerer Frequenz die obere Grenzfrequenz des Tiefpaßfilters erniedrigt wird und bei sinkendem Rauschanteil, welcher zu einer kleineren Regelspannung und einer höheren Taktfrequenz führt, die obere Grenzfrequenz des Tiefpaßfilters erhöht wird.

Dies hat zur Wirkung, daß beim Vorliegen unverrauschter Bilder keine Tiefpaßfilterung erfolgt und damit kein Detailverlust auftritt, während bei verrauschten Bildern durch die beschriebene Tiefpaßfilterung, die vom Rauschanteil abhängig ist, eine verbesserte Bilddarstellung erfolgt. Der Detailverlust, der beim Vorliegen verrauschter Bildsignale vorliegt, macht sich weniger störend bemerkbar als Rauschen.

## Patentansprüche

1. Vorrichtung zur verbesserten Darstellung verrauschter Bildsignale, mit
- einem Bildsignaleingang,
- einem im Bildsignalweg angeordneten Tiefpaßfilter, und
- einem Bildsignalausgang,
**dadurch gekennzeichnet,** daß
- sie weiterhin eine Schaltung (2, 3) zur Erkennung des in den Bildsignalen enthaltenen Rauschanteils aufweist,
- die obere Grenzfrequenz des Tiefpaßfilters veränderbar ist, und
- der Ausgang der Schaltung (2, 3) zur Erkennung des in den Bildsignalen enthaltenen Rauschanteils mit dem Tiefpaßfilter (1) verbunden ist, um die obere Grenzfrequenz des Tiefpaßfilters in Abhängigkeit vom ermittelten Rauschanteil zu verändern.

2. Vorrichtung nach Anspruch 1,
**dadurch gekennzeichnet,** daß die Schaltung (2, 3) zur Erkennung des in den Bildsignalen enthaltenen Rauschanteils ein Hochpaßfilter (2) und einen ausgangsseitig mit dem Hochpaßfilter verbundenen Hüllkurvendetektor (3) aufweist.

3. Vorrichtung nach Anspruch 1 oder 2,
**dadurch gekennzeichnet**, daß das Tiefpaßfilter (1) ein Switched-Capacitor-Tiefpaßfilter ist.

4. Vorrichtung nach Anspruch 3,
**dadurch gekennzeichnet,** daß die Schaltung (2, 3) zur Erkennung des in den Bildsignalen enthaltenen Rauschanteils eine dem Rauschanteil proportionale Regelspannung zur Verfügung stellt und die Regelspannung einem spannungsgesteuerten Oszillator (5) zuführbar ist, um aus der Regelspannung ein Taktsignal zu erzeugen, welches zur Veränderung der oberen Grenzfrequenz einem Takteingang des Switched-Capacitor-Tiefpaßfilters (1) zuführbar ist.

5. Vorrichtung nach Anspruch 4,
**dadurch gekennzeichnet,** daß
die Schaltung (2, 3) zur Erkennung des in den Bildsignalen enthaltenen Rauschanteils mit dem spannungsgesteuerten Oszillator (5) über einen Verstärker (4) verbunden ist.

## Claims

1. Device for the improved display of noisy picture signals, comprising
- a picture signal input,
- a low-pass filter disposed in the picture signal path and
- a picture signal output,
characterized in that
- it furthermore has a circuit (2, 3) for detecting the noise component contained in the picture signals,
- the upper cut-off frequency of the low-pass filter is variable, and
- the output of the circuit (2, 3) for detecting the noise component contained in the picture signals is connected to the low-pass filter (1) in order to vary the upper cut-off frequency of the low-pass filter as a function of the noise component detected.

2. Device according to Claim 1, characterized in that the circuit (2, 3) for detecting the noise component contained in the picture signals comprises a high-pass filter (2) and an envelope curve detector (3) connected to the output of the high-pass filter.

3. Device according to Claim 1 or 2, characterized in that the low-pass filter (1) is a switched-capacitor low-pass filter.

4. Device according to Claim 3, characterized in that the circuit (2, 3) for detecting the noise component contained in the picture signals provides a control voltage proportional to the noise component and the control voltage can be fed to a voltage-controlled oscillator (5) in order to generate a clock signal from the control voltage that can be fed to a clock input of the switched-capacitor low-pass filter (1) to vary the upper cut-off frequency.

5. Device according to Claim 4, characterized in that the circuit (2, 3) for detecting the noise component contained in the picture signals is connected to the voltage-controlled oscillator (5) via an amplifier (4).

## Revendications

1. Dispositif pour la représentation améliorée de signaux d'image affectés de bruits, comportant :
- une entrée pour les signaux d'image,
- un filtre passe-bas disposé dans le trajet de déplacement des signaux d'image, et
- une sortie pour les signaux d'image,
caractérisé en ce que
- il comporte un circuit (2,3) pour identifier la composante de bruit contenue dans les signaux d'image,
- la fréquence limite supérieure du filtre passe-bas est modifiable, et
- la sortie du circuit (2,3) servant à identifier la composante de bruit contenue dans les signaux d'image est reliée au filtre passe-bas (1) de manière à modifier la fréquence limite supérieure du filtre passe-bas en fonction de la composante de bruit déterminée.

2. Dispositif selon la revendication 1, caractérisé en ce que le circuit (2,3) servant à identifier la composante de bruit contenue dans les signaux d'image est un filtre passe-haut (2) et possède un détecteur de courbe enveloppe (3) relié, côté sortie, au filtre passe-haut.

3. Dispositif selon la revendication 1 ou 2, caractérisé en ce que le filtre passe-bas (1) est un filtre passe-bas à condensateur commuté.

4. Dispositif selon la revendication 3, caractérisé en ce que le circuit (2,3) servant à identifier la composante de bruit contenue dans les signaux d'image, délivre d'une tension de régulation proportionnelle à la composante de bruit et que la tension de régulation peut être envoyée à un oscillateur (5) commandé par la tension, pour la production, à partir de la tension de régulation, d'un signal de cadence qui peut être envoyé, pour modifier la fréquence d'image supérieure, à une entrée de cadence du filtre passe-bas (1) à condensateur commuté.

5. Dispositif selon la revendication 4, caractérisé en ce que le circuit (2,3) servant à identifier la composante de bruit contenue dans les signaux d'image est relié à un oscillateur (5) commandé par la tension, par l'intermédiaire d'un amplificateur (4).
